**Europäisches Patentamt**

**European Patent Office**

**Office européen des brevets**

(19)

(11) Numéro de publication: **0 141 720**
**B1**

(12) **FASCICULE DE BREVET EUROPEEN**

(45) Date de publication du fascicule du brevet:
**13.05.87**

(21) Numéro de dépôt: **84402109.7**

(22) Date de dépôt: **19.10.84**

(51) Int. Cl.⁴: **A 47 J 27/08**

(54) **Dispositif pour la cuisson sous vide des aliments, muni d'un stabilisateur de dépression.**

(30) Priorité: **20.10.83 BE 211740**

(43) Date de publication de la demande:
**15.05.85 Bulletin 85/20**

(45) Mention de la délivrance du brevet:
**13.05.87 Bulletin 87/20**

(84) Etats contractants désignés:
**BE DE FR GB IT NL**

(56) Documents cités:
**DE - C - 276 437**
**FR - A - 801 918**
**FR - A - 2 154 947**
**GB - A - 2 080 143**
**US - A - 3 800 778**

(73) Titulaire: **FONDATION ANDRE OLEFFE, 121, rue de la Loi, B-1040 Bruxelles (FR)**

(72) Inventeur: **Vanderschueren, Emile Felix, 2, rue de l'Usine, B-5830 Mazy (BE)**

(74) Mandataire: **Mongrédien, André et al, c/o BREVATOME 25, rue de Ponthieu, F-75008 Paris (FR)**

## Description

La présente invention a pour objet un dispositif pour la cuisson sous vide des aliments.

Le principe de la cuisson sous vide de certains produits alimentaires n'est pas nouveau. Dans la publication de brevet français FR-A-2024077, par exemple, il est décrit une chambre de chauffe pour appareils de cuisson sous vide utilisable en sucrerie. Cette chambre de chauffe comprend des tuyaux chauffants de section annulaire, formant un faisceau tubulaire à structure en nid d'abeilles.

Selon la publication de brevet français FR-A-2067489, on connaît un dispositif pour le traitement par cuisson, refroidissement et déshydratation sous vide, de produits alimentaires comme la viande et le poisson.

Ces appareils sont en réalité des installations industrielles qui par leur encombrement, leur complexité, leur lourdeur de mise en oeuvre, ne présentent pas les caractéristiques requises pour une utilisation domestique. Bien que traitant effectivement des produits alimentaires, ces installations ne constituent donc pas des appareils électroménagers au sens usuel du terme, susceptibles d'être utilisés dans la vie quotidienne, pour la préparation des repas.

Or, le besoin de tels dispositifs existe, du fait des multiples avantages que présente la cuisson sous vide. De tels dispositifs sont décrits dans le FR-A-2154947 ou encore le GB-A-2080143. Comme ces avantages ne semblent pas avoir été pleinement perçus dans l'art antérieur, il n'est pas inutile de les souligner.

Les travaux dans le domaine de la nutrition et de la diététique, ont montré que les techniques de cuisson actuelles détruisent tout ou partie des substances nutritives essentielles, et même qu'elles créent d'autres produits qui peuvent être toxiques pour l'organisme humain.

Il a été établi que ce sont les températures trop élevées qui détruisent les vitamines et que l'oxygène est responsable, à ces températures, de la production de substances toxiques. La cuisson des aliments dits «bouillis» par immersion dans l'eau et ébullition à la pression atmosphérique, ainsi que la cuisson sur feu nu (grillades), sont en fait des méthodes archaïques, destructrices de substances essentielles des aliments.

En fait, il faut s'interroger sur le véritable mécanisme de la cuisson. Schématiquement on peut dire que les viandes, poissons et légumes sont constitués, dans leur plus grande partie, d'eau, qui s'y trouve sous forme de microglobules emprisonnés dans une trame fibreuse. La cuisson consiste, d'une part, en un ramolissement des fibres par hydratation et, d'autre part, en un éclatement des globules par apport de chaleur.

A la pression atmosphérique, l'éclatement des microglobules ne peut se faire qu'à la température de 100°C, température d'ébullition de l'eau à cette pression. Si un aliment est placé dans une atmosphère où règne une pression moindre, l'éclatement des microglobules s'en trouvera facilité et commencera donc à une température plus basse.

La cuisson des aliments n'est donc nullement liée à la température de 100°C, qui n'est en fait que celle de l'ébullition de l'eau qui y est contenue. Sous vide partiel, la cuisson s'opère avec succès à des températures plus basses. Par exemple, la cuisson est possible à 80°C sous une pression moitié de la pression atmosphérique.

De même, les huiles et les graisses animales ou végétales entrent en ébullition à des températures également plus basses sous dépression. Par exemple, sous vide partiel, des fritures se réalisent avec succès à des températures d'environ 110°C.

A cet avantage procuré par la cuisson sous vide s'en ajoute un autre: comme l'atmosphère est raréfiée, les réactions des aliments avec l'oxygène se trouvent considérablement réduites, ce qui est un facteur important de réduction de l'oxydation des graisses.

Par ailleurs, la diminution de la température de cuisson entraîne bien évidemment une économie d'énergie.

Enfin, un dispositif de cuisson sous vide ne répand ni buée, ni odeur dans le local où il est mis en oeuvre.

Pour exploiter tous ces avantages, encore faut-il que le dispositif de cuisson sous vide soit de mise en oeuvre simple ce qui n'est pas le cas des installations évoquées plus haut. C'est justement le but de l'invention de proposer un appareil d'une grande simplicité et qui permet de tirer profit des multiples avantages de la technique en question.

L'un des problèmes posés par la mise en oeuvre de la cuisson sous vide est l'utilisation d'un moyen de pompage simple qui, malgré sa simplicité, soit apte à assurer, dans la chambre de cuisson, une pression partielle à peu près constante.

Un autre problème est d'éviter qu'une partie des aliments soit aspirée de la chambre de cuisson vers le moyen de pompage.

Dans le cas des installations industrielles visées plus haut, ces problèmes se trouvent résolus par des moyens très complexes (régulation en pression, faisceau tubulaire, circulation des produits alimentaires, électronique de contrôle, etc...) qu'il n'est évidemment pas question d'installer dans une cuisine.

L'invention résout ces problèmes de manière simple par l'adjonction d'un élément que l'on peut qualifier de stabilisateur de dépression.

De façon plus précise, la présente invention a pour objet un dispositif pour la cuisson sous vide d'aliments, ce dispositif comprenant une chambre de cuisson étanche au vide reliée à un moyen de pompage, ce dispositif étant caractérisé par le fait qu'il comprend en outre, disposé entre la chambre de cuisson et le moyen de pompage, un organe stabilisateur de dépression qui comprend un récipient étanche au vide et partiellement rempli d'eau, ce récipient étant muni à sa partie supérieure d'un conduit de sortie relié au moyen de pompage, avec, dans ce récipient étanche, un serpentin plongeant dans l'eau du récipient, ce serpentin ayant une première extrémité qui débouche au-dessus de la surface libre de l'eau et une seconde extrémité qui est reliée, par une canalisation, à la chambre de cuisson.

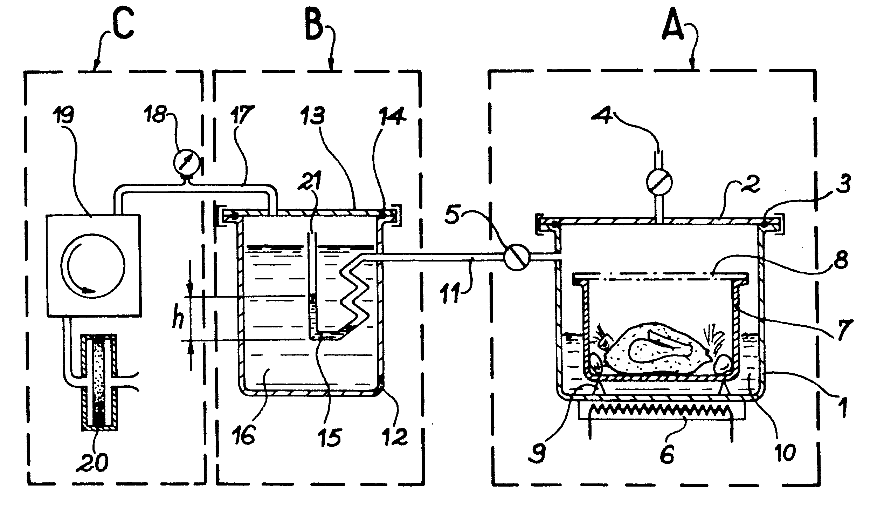

Les caractéristiques de l'invention apparaîtront mieux après la description qui suit, d'un exemple de réalisation donné à titre explicatif et nullement limitatif. Cette description se réfère à une figure unique annexée, qui représente une vue schématique de l'appareil de l'invention.

Le dispositif représenté se compose de trois parties distinctes, à savoir: une chambre de cuisson A, un stabilisateur de dépression B, et un moyen de production de vide C. La chambre de cuisson A se compose d'un récipient étanche, suffisamment robuste pour résister à la pression atmosphérique quand un vide partiel est créé dans son volume intérieur. Ce récipient est muni d'un couvercle assurant une étanchéité convenable pendant la cuisson. Pour cela on peut utiliser un joint 3 ou usiner les pièces en contact avec suffisamment de précision pour que sous l'effet de la dépression l'étanchéité soit assurée. Le couvercle 2 est muni d'un robinet 4 de remise à l'air. Ce récipient peut être constitué, par exemple, par un appareil du genre «autocuiseur» légèrement transformé pour remplacer la soupape par le robinet de remise à l'air. La chambre de cuisson est chauffée par un système quelconque, mais de préférence par une plaque électrique représentée en 6 ou par une rampe à gaz. Bien que ce dispositif soit suffisant pour assurer la cuisson, on peut, dans certains cas, placer à l'intérieur de la chambre de cuisson un récipient intérieur 7, dans lequel se placent les aliments à cuire. Ce récipient intérieur peut être éventuellement muni d'un couvercle 8. Le récipient 7 peut être posé sur des supports 9 de façon à éviter le contact direct avec le fond du récipient 1.

Selon une variante, le récipient 1 est partiellement rempli d'un liquide transmetteur-accumulateur de chaleur 10 qui peut être, par exemple, de l'eau, une huile ou une graisse comestible selon les aliments à traiter. Le récipient 7 peut ou non baigner dans ce liquide, ce qui permet d'obtenir des cuissons en phase vapeur.

La chambre de cuisson A est raccordée au stabilisateur B par un conduit 11 muni d'un robinet 5. Le stabilisateur B se compose d'un récipient 12 fermé par un couvercle 13 et un joint d'étanchéité 14. L'ensemble est étanche et doit également pouvoir résister à la pression atmosphérique extérieure quand un vide partiel est créé.

Le récipient 12 est partiellement rempli d'eau 16. Un serpentin 15 plonge dans cette eau. Ce serpentin débouche dans l'enceinte 12 par une extrémité 21 située au-dessus du niveau libre de l'eau. Le stabilisateur de dépression B est connecté à l'ensemble de production de vide C par un conduit 17 pourvu d'un sélecteur de dépression 18. Ce sélecteur est réuni à une pompe 19 laquelle est reliée à un filtre 20 destiné à retenir d'éventuelles traces de substances non retenues par la condensation.

Le fonctionnement du stabilisateur B est le suivant. Au début du pompage, l'air contenu dans la chambre de cuisson est aspiré par la pompe à travers le conduit 11, le serpentin 15, le conduit 17 et rejeté dans l'air libre à travers le filtre 20. Lorsque l'ébullition commence dans la chambre de cuisson, des vapeurs chaudes pénètrent dans le serpentin et s'y condensent. Il se produit alors un «bouchon» liquide à la partie inférieure du serpentin. La position de ce bouchon dépend des conditions de pompage.

Il se produit un équilibre tel que la dépression qui règne dans la chambre de cuisson 1 est égale à la dépression qui règne dans l'enceinte 12 augmentée de la hauteur d'eau $h$ entre les deux niveaux de liquide dans le serpentin. Si la dépression dans la chambre de cuisson augmente, pour une raison ou pour une autre, le bouchon se déplace dans le serpentin jusqu'à être éjecté ce qui permet alors un pompage direct.

Ce dispositif assure, d'une part, une stabilisation de la pression dans la chambre de cuisson et, en même temps, un isolement entre les parties A et C. Le moyen B est donc simultanément un stabilisateur, un condenseur et un obturateur. Grâce à ce système, la mise en oeuvre de l'appareil de cuisson sous vide se trouve grandement facilitée.

Naturellement, la forme du récipient 7 peut être très variée, selon les aliments à cuire. Il peut s'agir d'un récipient plein ou, au contraire, d'un panier, tel qu'on en utilise dans les friteuses. Le récipient 7 peut même être inexistant, comme indiqué plus haut.

L'invention ne se limite évidemment pas à la cuisson d'aliments destinés à entrer immédiatement dans la composition des repas. Le dispositif de l'invention peut servir aussi à la pasteurisation du lait, à la cuisson des confitures ou gelées, à la réalisation de conserves de fruits, légumes, etc.

**Revendications**

1. Dispositif pour la cuisson sous vide d'aliments, comprenant une chambre de cuisson étanche au vide (A) reliée à un moyen de pompage (C), caractérisé en ce qu'il comprend en outre, disposé entre la chambre de cuisson (A) et le moyen de pompage (C) un organe stabilisateur de dépression (B) qui comprend un récipient étanche au vide (12) partiellement rempli d'eau (16), ce récipient étant muni à sa partie supérieure d'un conduit de sortie (17) relié au moyen de pompage (C) avec, dans ce récipient étanche (12), un serpentin (15) plongeant dans l'eau (16) du récipient, ce serpentin ayant une première extrémité (21) qui débouche au-dessus de la surface libre de l'eau et une seconde extrémité qui est reliée, par une canalisation (11), à la chambre de cuisson (A).

2. Appareil selon la revendication 1, caractérisé par le fait que la chambre de cuisson (A) comprend un récipient (1) étanche au vide, et à l'intérieur de ce récipient, un récipient intérieur (7) destiné à recevoir les aliments.

3. Appareil selon l'une quelconque des revendications 1 et 2, caractérisé par le fait que le récipient (1) est partiellement rempli d'un liquide transmetteur-accumulateur de chaleur (10).

4. Appareil selon l'une quelconque des revendications 1 à 3, caractérisé par le fait que le récipient intérieur (7) est un panier, l'appareil étant une friteuse.

## Patentansprüche

1. Vorrichtung zum Kochen von Nahrungsmitteln im Vakuum, mit einer vakuumdichten Kochkammer (A), die mit einer Pumpanordnung (C) verbunden ist, dadurch gekennzeichnet, dass sie ausserdem einen zwischen der Kochkammer (A) und der Pumpanordnung (C) angeordneten Unterdruckregler (B) aufweist, der einen vakuumdichten Behälter (12) enthält, der teilweise mit Wasser (16) gefüllt ist, wobei dieser Behälter in seinem oberen Bereich mit einer Auslassleitung (17) versehen ist, die mittels der Pumpanordnung (C) mit einer im dichten Behälter (12) angeordneten und in das Wasser (16) im Behälter eintauchenden Schlange (15) verbunden ist, wobei die Schlange ein erstes Ende (21) aufweist, das oberhalb der freien Oberfläche des Wassers mündet und ein zweites Ende aufweist, das über eine Leitung (11) mit der Kochkammer (A) verbunden ist.

2. Vorrichtung nach Anspruch 1, dadurch gekennzeichnet, dass die Kochkammer (A) einen vakuumdichten Behälter (1) aufweist sowie einen Innenbehälter (7) im Inneren dieses Behälters zur Aufnahme der Lebensmittel.

3. Vorrichtung nach einem der Ansprüche 1 und 2, dadurch gekennzeichnet, dass der Behälter (1) teilweise mit einer die Wärme übertragenden und speichernden Flüssigkeit (10) gefüllt ist.

4. Vorrichtung nach einem der Ansprüche 1 bis 3, dadurch gekennzeichnet, dass der Innenbehälter (7) ein Korb ist und dass die Vorrichtung eine Friteuse ist.

## Claims

1. Appliance for the vacuum cooking of food, comprising a vacuum-tight cooking chamber (A) connected to a pumping means (C), characterized in that it also possesses, located between the cooking chamber (A) and the pumping means (C), a pressure-drop stabilization member (B) which comprises a vacuum-tight vessel (12) partially filled with water (16), this vessel being equipped in its upper part with an outlet pipe (17) connected to the pumping means (C), with, in this sealed vessel (12), a coil (15) immersed in the water (16) of the vessel, this coil having a first end (21) projecting above the free surface of the water and a second end connected to the cooking chamber (A) by means of a pipeline (11).

2. Appliance according to Claim 1, characterized in that the cooking chamber (A) possesses a vacuum-tight vessel (1) and, inside this vessel, an inner vessel (7) intended for receiving the food.

3. Appliance according to either one of Claims 1 and 2, characterized in that the vessel (1) is partially filled with a liquid (10) transmitting and accumulating heat.

4. Appliance according to any one of Claims 1 to 3, characterized in that the inner vessel (7) is a basket, the appliance being a deep-fat fryer.